# EUROPEAN PATENT APPLICATION

(11) **EP 1 256 740 A2**
(43) Date of publication of application: **13.11.2002**
(21) Application number: 02010062.4
(22) Date of filing: 06.05.2002
(51) Int. Cl.: F16D 65/21, F16D 55/224, F16D 55/228

(54) **Hydraulic disc brake**

(30) Priority: 10.05.2001 JP 2001139891
(71) Applicant: Sumitomo (Sei) Brake Systems, Inc., Hisai-shi, Mie (JP)
(72) Inventor: Yunba, Seiichi c/o Sumitomo (SEI) Brake Sys., Inc., Itama-shi, Hyogo (JP)
(74) Representative: Grünecker, Kinkeldey, Stockmair & Schwanhäusser Anwaltssozietät

(57) **Abstract**

A disc brake is proposed which is of low cost, improved reliability and less weight and size. Cylinders (2,3) are formed in a caliper (1) therethrough so as to be machined from the bottom of the cylinder (2), and a cylinder cover (4) is mounted to close the cylinder (2). A cylinder cover (4) is inserted into a large-diameter hole (10) at the rear of the cylinder (2). The cylinder cover (4), which is supported by an end face of the large-diameter hole (10), is fixed by caulking the portion at the rear of the cylinder (2) to sandwich it between an engaging piece (12) produced by plastic deformation and the end face of the large-diameter hole (10).

## Description

### BACKGROUND OF THE INVENTION

This invention relates to a disc brake of a type in which cylinders are formed in a caliper to mount brake pistons and the rear openings of the cylinders are closed by cylinder covers.

Disc brakes using a caliper of such a type are disclosed in JP patent publications 5-248458, 10-9302 and 11-230205. Unlike ordinary opposed piston type disc brakes, with this type of disc brakes, it is not necessary to split a caliper into the inner and outer portions to form the cylinders. Also, it is not necessary to form cutouts in the outer claw in ordinary floating type disc brakes to avoid interference with cylinder machining tools. Thus, for either the opposed piston type or floating type, it is possible to increase the rigidity of the caliper.

In the disc brakes disclosed in these publications, the cylinder covers (that is, end plates for closing the bottoms of the cylinders) are fixed by the following methods:
(1) A circlip or a stopper plate is mounted to the outer periphery of a small-diameter portion of a cylinder cover that has passed a small-diameter hole at the rear of each cylinder, and is engaged with the outer surface of the caliper.
(2) A nut is threaded onto the outer periphery of a small-diameter portion of a cylinder cover that has passed a small-diameter hole at the rear of each cylinder to clamp the caliper between the nut and a large-diameter portion of the cylinder cover.
(3) The outer periphery of the small-diameter portion of each cylinder cover is threadedly engaged with the inner surface of the small-diameter hole at the rear of the cylinder.

In the arrangement in which the cylinder covers are fixed by the structure (1), the cylinder covers tend to shake, and shaking causes variation in the consumed fluid amount of the caliper. Thus this may have a bad influence on the operating feeling and performance of the brake. Further, since circlips or stopper plates are needed, the number of parts increases.

Also, with the structures (2) and (3), threading is necessary for the caliper or cylinders. For the structure (3), it is necessary to form a recess for turning operation in the outer surface (rear surface) of each cover. This increases the working cost. Also, it is necessary to check whether tightening of the thread engagement portions is good or bad and control the tightening force. Further, for allowance of the thread engagement, the axial dimension of the caliper increases.

Besides, since the outer surfaces of the cylinder covers are not flat, it is impossible to provide logos on these surfaces. Also, trouble may develop in the vehicle brake if the caliper is disassembled and reassembling of the cylinder covers is improper.

### SUMMARY OF THE INVENTION

According to this invention, there is provided a brake cylinder comprising a caliper formed with a cylinder, a brake piston mounted in the cylinder, and a cylinder cover fixed to the caliper to close one end of the cylinder, characterized in that the cylinder cover is fixed by inserting it into a large-diameter hole formed at the rear of the cylinder to abut it against an end face of the large-diameter hole and caulking the caliper or the cylinder cover.

There is also provided a brake cylinder comprising a caliper formed with a cylinder, a brake piston mounted in the cylinder, and a cylinder cover fixed to the caliper to close one end of the cylinder, characterized in that the thickness of the outer peripheral portion of the cylinder cover where fixing by caulking is carried out is thicker than the thickness at the central portion of the cylinder cover.

For these disc brakes, it is preferable that liquid-tight sealing between the caliper and the cylinder cover is carried out by:
(i) charging a sealing agent between the outer peripheral surface of the cylinder cover and the inner surface of the caliper,
(ii) fitting a heat-shrinkable tube on the outer periphery of the cylinder cover at its portion where it is fixed by caulking such that the heat-shrinkable tube is disposed between the cover and the inner surface of the caliper, or
(iii) liquid-tightly fitting the cylinder cover in the cylinder with an interference.

Also preferably, a recess is formed in the inner surface of the cylinder cover, and the recess has a larger diameter than the outer diameter of the brake piston mounted in the cylinder so that part of the brake piston will be received in the recess.

Unlike fixation by use of circlips or the like, fixation by caulking is stable. Thus, variation in the consumed fluid amount of the caliper due to shaking of the cylinder cover, or the resulting worsening of the brake operating feeling and worsening of its performance will not occur.

Also threading is not necessary or a recess for turning the cylinder cover does not have to be formed. Thus it is possible to reduce the working cost. Compared with thread engagement structures, assembling and control are easy. Further, no large fitting allowance is needed unlike thread engagement structures, so that it is possible to shorten the axial dimension of the caliper. If fixed by caulking, the caliper will not be disassembled in the market, so that trouble resulting from disassembling is avoided.

According to this invention, since caulking is done on a portion near the opening of the cylinder, there is no need to provide a protrusion for caulking on the cylinder cover. Thus it is possible to reduce the thickness of the cover, simplify the shape and reduce the size and weight. It is also possible to provide printing, impressions or logos on the outer surface of the cover.

In an arrangement in which the thickness of the cylinder cover at a portion of its outer periphery where it is fixed by caulking is thicker than the thickness of the central portion of the cover, it is possible to achieve further reduction in weight by eliminating redundant thickness of the cover. If combined with the above structure in which it is caulked at a portion near the opening of the cylinder, the effect of reduced weight reveals to the maximum.

In the arrangement in which the liquid-tight sealing between the caliper and the cylinder cover is carried out by a sealing agent charged at the interface or a heat-shrinkable tube, an O-ring is not necessary, so that there is no need to form a groove for the O-ring. Thus, it is possible to reduce the thickness of the outer peripheral portion of the cover. This also brings about the effect of reducing the weight. In the arrangement in which a heat-shrinkable tube is used, since the tube and the cylinder cover are integrated, the cover can be mounted easily.

In the arrangement in which the cylinder cover is liquid-tightly fitted with an interference, no sealing agent or heat-shrinkable tube is needed. This is advantageous in productivity and cost.

In the arrangement in which a recess is formed in the inner surface of the cylinder cover so that part of the brake piston will be received in the recess, it is possible to shorten the axial dimension of the caliper. This reduces weight and size, and reduces sliding area (and thus sliding resistance).

Other features and objects of the present invention will become apparent from the following description made with reference to the accompanying drawings, in which:

### BRIEF DESCRIPTION OF THE DRAWINGS

Fig. 1 is a sectional plan view showing an embodiment of the disc brake according to this invention;
Fig. 2 is a sectional side view of another embodiment;
Fig. 3 is an enlarged sectional view showing how the cylinder cover is mounted;
Figs. 4 and 5 are sectional views showing examples of mounting of a cylinder cover having a thin central portion;
Fig. 6 is a sectional view showing an embodiment of a cylinder cover having its thickness gradually increasing toward the outer periphery;
Fig. 7 is a sectional view showing an embodiment in which the cylinder cover is caulked;
Figs. 8 and 9 are sectional views showing embodiments in which sealing between the caliper and the cylinder cover is done by a filling type sealing member or a heat-shrinkable tube;
Fig. 10 is a sectional view showing an embodiment in which the cylinder cover is liquid-tightly fitted in the cylinder with an interference; and
Fig. 11 is a sectional view showing an embodiment in which a recess is formed in the inner surface of the cylinder cover.

### DETAILED DESCRIPTION OF THE PREFERRED EMBODIMENT

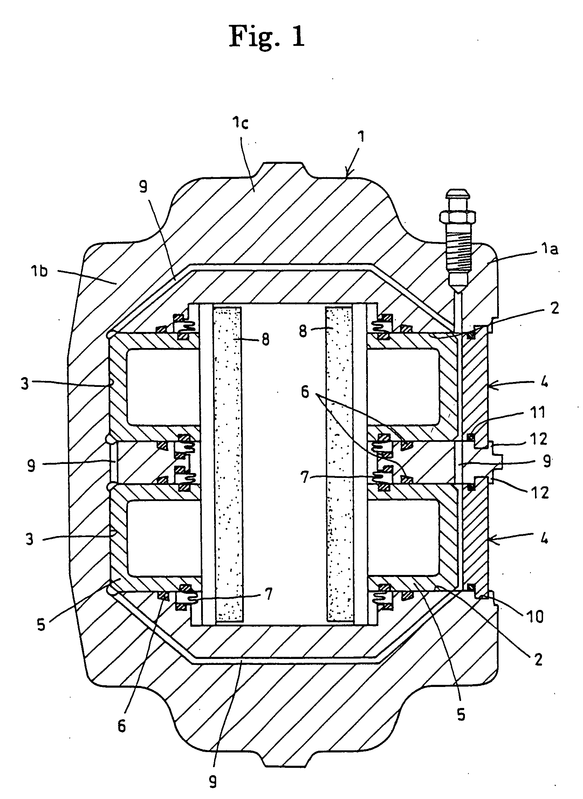

The embodiments of this invention will be described with reference to Figs. 1-11.

The opposed piston type disc brake of Fig. 1 has a caliper 1 which includes an inner portion 1a and an outer portion 1b and a bridge portion 1c straddling a disc (not shown), which are integrally cast. Cylinders 2 in the inner portion 1a are formed therethrough, and the cylinders 2 and non-through cylinders 3 in the outer portion 1b are both finished and worked from the righthand end of Fig. 1. The bottoms of the cylinders 2 are closed by mounting cylinder covers 4. In each cylinder, a brake piston 5, a piston seal 6 having a piston-retracting function, and a boot 7 are mounted. Pads 8 are brought into sliding contact with both surfaces of the disc. The pads 8 are supported by pad pins (not shown) laterally extending between the inner portion 1a and the outer portion 1b of the caliper 1 through pin holes in the backing plates so as to be slidable in the axial direction of the disc.

The cylinders 2 communicate with each other through passages 9. This is true with the cylinders 3, too. Introducing ports for supplying brake fluid into the caliper 1 are not shown. The introducing ports are provided in the caliper 1 or in the cylinder covers 4.

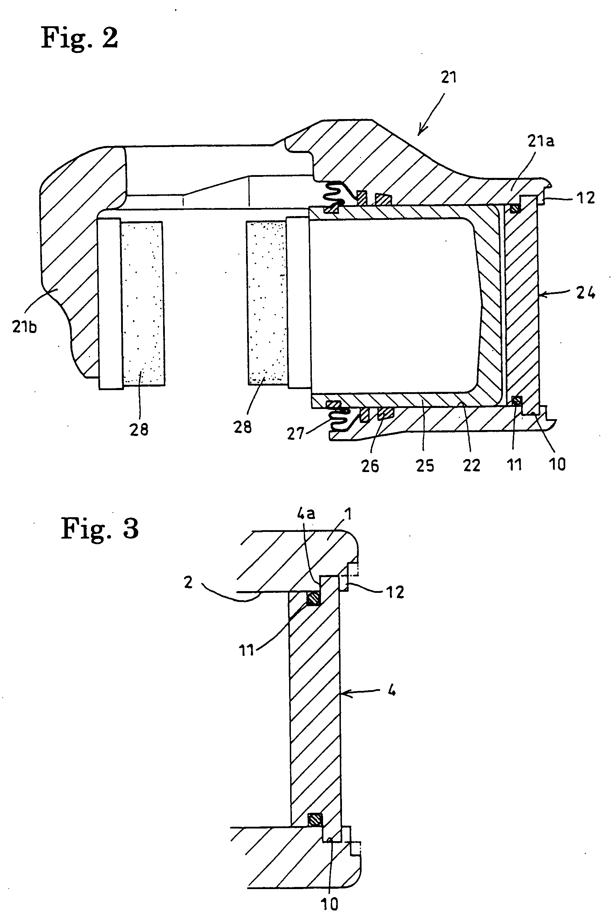

With a floating type disc brake shown in Fig. 2, a cylinder 22 is formed through an inner portion 21a of a caliper 21 so that finish working is possible from the bottom of the cylinder 22. This eliminates the need for cutouts for avoiding interference with cylinder working tools, which were heretofore formed in an outer claw 21b of the caliper 22.

As with the brake of Fig. 1, the bottom of the cylinder 22 is closed by a cylinder cover 24. The disc brake of Fig. 2 has a piston 25, a piston seal 26, a boot 27, and pads 28.

The caliper 21 is supported by e.g. a torque member so as to be slidable in the axial direction of the disc. When the pad 28 on the inner side is pressed against the disc (not shown) by the piston 22, the caliper 21 will slide rightwardly in the figure by a reactive force. Since this mechanism is well-known, it is not shown.

The illustrated disc brakes have their cylinder covers 4 and 24 fixed by caulking. The caulked portions are of the same structure for both cylinder covers 4 and 24. Thus, the following description will be made only for the cylinder cover 4.

Fig. 3 shows on an enlarged scale the portion of the cylinder 2 closed by the cylinder cover 4. As shown, a large-diameter hole 10 is formed at the rear end of the cylinder 2, and a seat surface 4a on the outer periphery of the cylinder cover 4 is brought into abutment with the end face of the large-diameter hole 10. A seal member 11 such as an O-ring is provided to liquid-tightly seal between the cylinder cover 4 and the caliper 1.

The cylinder cover 4 is fixed by caulking by pressurizing a portion shown by chain line at the opening of the cylinder 2 with a caulking device (not shown), and sandwiching the outer peripheral portion of the cover 4 between an engaging piece 12 produced by plastic deformation by caulking and the end face of the large-diameter hole 10. With this arrangement, there is no need to form a protrusion for caulking on the cylinder cover 4. Thus, it is possible to lighten and flatten the cover.

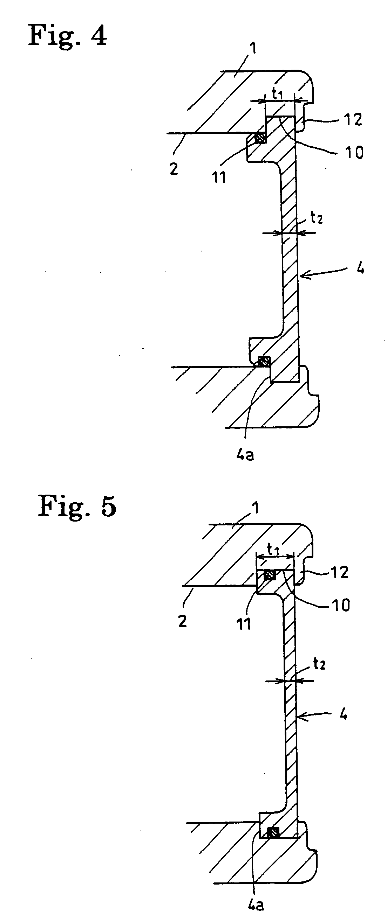

Figs. 4-6 are other embodiments. In any of them, the thickness t1 of the portion where the cylinder cover 4 is fixed by caulking is set to be larger than the thickness t2 of the central portion of the cover 4.

The thickness t2 of the central portion of the cover 4 that is necessary to withstand hydraulic pressure may be smaller than the thickness t1 of the cylinder cover 4 which is required for stability of fixing by caulking. Thus, any redundant thickness at the central portion is eliminated by creating a difference in thickness at these portions. This reduces the weight.

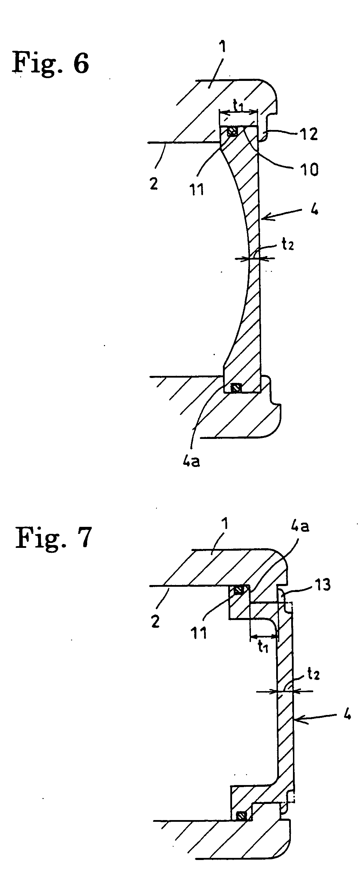

As for the structure of Fig. 6, a spherical or conical recess is formed in the inner surface of the cylinder cover 4 so that the thickness t2 of the central portion of the cover gradually increases from the center of the cylinder cover 4 toward its outer periphery, thereby eliminating any portion where the thickness changes suddenly. This also provides the effects of relaxing stress concentration and suppressing elastic deformation of the cylinder cover 4 under hydraulic pressure, so that the influence of elastic deformation is less likely to reach the caulked portion.

The effect of lightening by thinning the central portion of the cover 4 is obtainable with a structure in which as shown in Fig. 7, caulking is carried out on the cylinder cover 4 (engaging piece 13 is a part produced by plastic deformation). But, combining with the structure of Fig. 1 is preferable because the effect of lightening will reveal maximally.

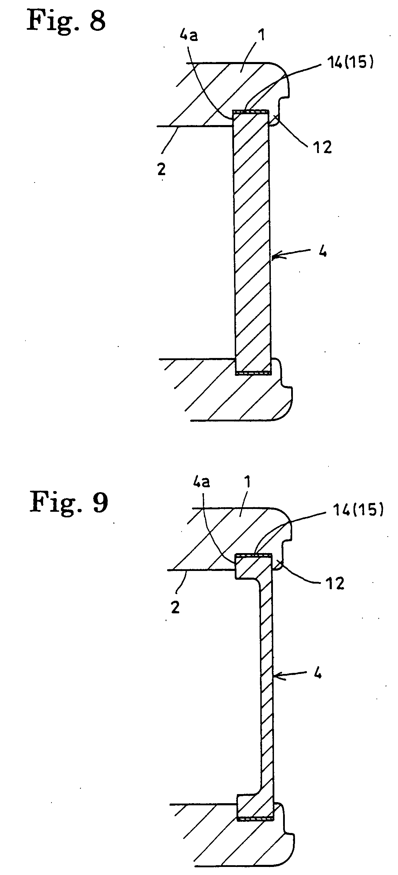

In Figs. 8 and 9, a sealing agent (caulking agent) 14 such as silicone rubber is filled between the inner surface of the cylinder 2 and the cylinder cover 4 to liquid-tightly seal the interface with the sealing agent 14, which hardens thereafter and becomes an elastic member. Thus, no groove for receiving a sealing member is necessary. This makes it possible to correspondingly reduce the thickness of the outer peripheral portion of the cover 4 and thus reduce the weight.

The same effect is obtainable with a structure in which a heat-shrinkable tube is mounted on the outer periphery of the cylinder cover 4 by heat-shrinking it to seal the interface with it. Since in this arrangement, the sealing agent 14 is simply replaced with the heat-shrinkable tube 15, a new figure is omitted.

Since the heat-shrinkable tube can be integrated with the cylinder cover 4 beforehand, the cylinder cover can be easily mounted.

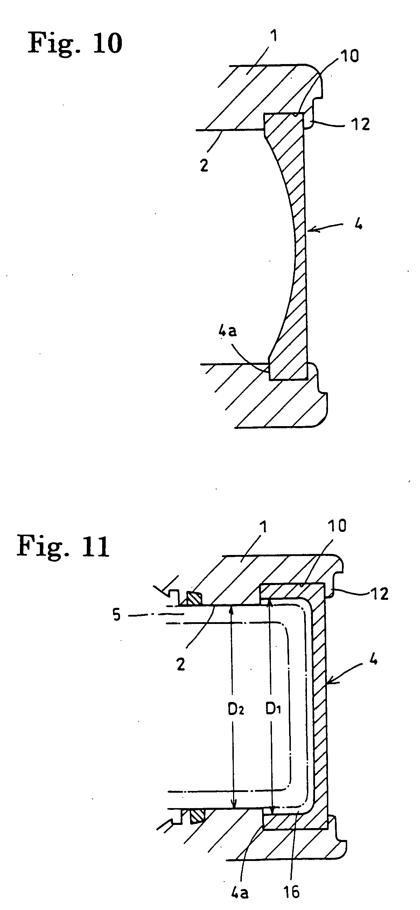

In Fig. 10, the cylinder cover 4 is fitted in the large-diameter hole 10 with an interference to provide liquid tightness to the fitting portion. If a sufficient thickness is ensured at the portion where the cylinder cover 4 is fixed by caulking, this portion is not likely to be deformed. Thus interference fitting can be done without trouble. This structure is advantageous in productivity and cost because it is possible to omit a seal member such as an O-ring or a heat-shrinkable tube and a filling type sealing agent.

In Fig. 11, a recess 16 having an inner diameter D1 that is larger than the outer diameter of the brake piston 5 inserted in the cylinder 2, preferably larger than the inner diameter D2 of the cylinder 2 is formed in the inner surface of the cylinder cover 4 to form the rear side of the cylinder 2 with the recess 16. This prevents increase in axial dimension of the caliper 1 for fitting interference of the cylinder cover 4, thus achieving further compactness and light-in-weight of the caliper. Also, since the interference region between the cylinder and the brake piston narrows, freedom of movement of the piston increases. This reduces the slide resistance.

In Fig. 11, the cylinder cover 4 is liquid-tightly fitted in the large-diameter hole 10 with an interference. But the already described sealing member such as an O-ring or a heat-shrinkable tube or a filling type sealing agent may be used to liquid-tightly seal between the cylinder 2 and the cylinder cover 4.

As described above, with the disc brake of this invention, since the cylinder cover is fixed by caulking the caliper or the cylinder cover, advantage of the caulking arrangement is achieved. Also, since there is no need to provide a protrusion for caulking on the cylinder cover, it is possible to achieve compactness and reduced weight. Further, it is possible to provide logos or the like on the outer surface of the cylinder cover.

In an arrangement in which the thickness of the portion where the cylinder cover is fixed by caulking is thicker than the thickness at the central portion, it is possible to eliminate any redundant thickness and reduce the weight.

In an arrangement in which a sealing agent or a heat-shrinkable tube is used to liquid-tightly seal between the caliper and the cylinder cover, since there is no need to provide a groove for receiving a sealing member, it is possible to further reduce the weight by reducing the thickness of the outer peripheral portion of the cylinder cover. By using a heat-shrinkable tube, ease of assembling also improves.

Further, by liquid-tightly fitting the cylinder cover with an interference, it is possible to omit a sealing member or a sealing agent. This is advantageous in cost.

Further, in an arrangement in which a recess is formed in the inner surface of the cylinder cover so that part of the brake piston will be received in the recess, it is possible to prevent increase in the axial dimension of the caliper for fitting allowance. This achieves reduced weight and compactness.

## Claims

1. A brake cylinder comprising a caliper formed with a cylinder, a brake piston mounted in said cylinder, and a cylinder cover fixed to said caliper to close one end of said cylinder, **characterized in that** said cylinder cover is fixed by inserting it into a large-diameter hole formed at the rear of said cylinder to abut it against an end face of the large-diameter hole and caulking said caliper or said cylinder cover.

2. A brake cylinder comprising a caliper formed with a cylinder, a brake piston mounted in said cylinder, and a cylinder cover fixed to said caliper to close one end of said cylinder, **characterized in that** the thickness of the outer peripheral portion of said cylinder cover where fixing by caulking is carried out is thicker than the thickness at the central portion of said cylinder cover.

3. The disc brake as claimed in claim 1 or 2 wherein a sealing agent is charged between the inner surface of said caliper and the outer peripheral surface of said cylinder cover to liquid-tightly seal between said caliper and said cylinder cover.

4. The disc brake as claimed in claim 1 or 2 wherein a heat-shrinkable tube is mounted on the outer periphery of said cylinder cover to liquid-tightly seal between said caliper and said cylinder cover.

5. The disc brake as claimed in claim 1 or 2 wherein said cylinder cover is liquid-tightly fitted in said cylinder with an interference.

6. The disk brake as claimed in claim 1 or 2 wherein a recess is formed in the inner surface of said cylinder cover, said recess having a larger diameter than the outer diameter of said brake piston mounted in said cylinder so that part of said brake piston will be received in said recess.
